# EUROPÄISCHE PATENTSCHRIFT

(11) **EP 1 776 062 B1**
(45) Veröffentlichungstag und Bekanntmachung des Hinweises auf die Patenterteilung: **04.09.2013**
(21) Anmeldenummer: 05772244.9
(22) Anmeldetag: 01.07.2005
(51) Int. Cl.: A61C 9/00

(54) **RETRAKTIONSFADEN MIT VERBESSERTER SAUGFÄHIGKEIT**
RETRACTION THREAD WITH IMPROVED ABSORBENCY
FIL RETRACTABLE AYANT UN POUVOIR ABSORBANT AMELIORE

(30) Priorität: 01.07.2004 DE 102004032099
(43) Veröffentlichungstag der Anmeldung: 25.04.2007
(73) Patentinhaber: Coltène/Whaledent GmbH + Co. KG, 89129 Langenau (DE)
(72) Erfinder: MÜLLER, Barbara, 89129 Langenau (DE); HEFTI, Hans-Ruedi, CH-8488 Turbenthal (CH); LAMPL, Stephan, CH-9450 Altstätten (CH)
(74) Vertreter: Forstmeyer, Dietmar
(86) Internationale Anmeldenummer: PCT/EP2005/007098
(87) Internationale Veröffentlichungsnummer: WO 2006/002939

(56) Entgegenhaltungen:
- EP-A- 1 188 419
- US-A- 4 184 316

## Beschreibung

Die vorliegende Erfindung betrifft nach Ihrem Oberbegriff einen Retraktionsfaden, wie er insbesondere als dentaler Retraktionsfaden in der Zahnmedizin für den Gingiva-Sulcus eingesetzt wird.

In der Zahnmedizin ist es im Allgemeinen erforderlich bei einer prothetischen bzw. teilprothetischen Zahnbehandlung, wie der Fertigung eines Inlays, Onlays, Krone oder Brücke, zur Formung der (Teil-)Prothese einen Abdruck anzufertigen. Wenn zur Formung der (Teil-)Prothese dieser Abdruck innerhalb des Bereichs des Zahnfleisches (Gingiva) genommen werden muss, tritt ein Problem auf, da dann zur Anfertigung eines genauen Abdrucks das Zahnfleisch zurückgedrängt werden muss und zudem oftmals auftretende Blutungen gestillt werden müssen.

Zu diesem Zweck werden sog. Retraktionsfäden in die taschenförmige Vertiefung (Sulcus) zwischen Gingiva und Zahn eingelegt, durch welche das Zahnfleisch mechanisch zurückgedrängt werden kann. Durch die Retraktionsfäden sollen Flüssigkeiten, wie Blut oder Speichel, aufgenommen werden können, um eine genaue Abdrucknehmung durch "Trockenhaltung" des Zahns zu ermöglichen. Die Retraktionsfäden sind zum Zwecke der Blutstillung zudem meist mit adstringierenden bzw. hämostatischen Wirkstoffen getränkt, welche an das Zahnfleisch abgegeben werden und dort ihre hämostatische Wirkung entfalten.

Als nachteilig bei den im Stand der Technik bekannten Retraktionsfäden hat sich insbesondere das nur unbefriedigende bzw. wenig befriedigende Vermögen der Retraktionsfäden zur Flüssigkeitsaufnahme erwiesen, was jedoch eine unerlässliche Voraussetzung für die zweckgemäße Anwendung der Retraktionsfäden im Gingiva-Sulcus ist. Durch eine mangelhafte Saugfähigkeit werden Flüssigkeiten, wie Blut oder Speichel, nicht vollständig vom Zahn ferngehalten, so dass auch hierdurch Fehler bei der Abdrucknahme auftreten können.

Demnach besteht die Aufgabe der vorliegenden Erfindung darin, einen Retraktionsfaden mit einer verbesserten Saugfähigkeit zur Verfügung zu stellen, durch welchen die genannten Probleme vermieden bzw. verringert werden können.

Diese Aufgabe wird durch einen Retraktionsfaden, insbesondere einen dentalen Retraktionsfaden zur Verwendung in der Zahnmedizin gelöst, der mindestens ein durch ein Luftverwirbelungsverfahren gefertigtes Garn aufweist. Vorteilhafte Ausgestaltungen der Erfindung sind durch die Merkmale der Unteransprüche angegeben.

Nach dem Vorschlag der Erfindung zeichnet sich der Retraktionsfaden dadurch aus, dass er mindestens ein durch ein Luftverwirbelungsverfahren gefertigtes Garn aufweist bzw. insbesondere aus einem, zwei oder mehreren durch ein Luftverwirbelungsverfahren gefertigten Garnen besteht. Das Garn bzw. die Garne sind hierbei vorteilhaft aus einem oder besonders vorteilhaft aus mehreren Polymer-Materialien, insbesondere in Form von Mischmaterialien, aufgebaut, bei denen es sich insbesondere um ein hochelastisches (HE) Polyamid, Polyurethane, Polyethylene, Polyacryle, Polychloride und/oder Polyester, Multifilament handeln kann. Wie Versuche der Anmelderin gezeigt haben, besitzen solche Garne eine besonders hohe Saugfähigkeit, insbesondere für Wasser, und ein besonders hohes Quellvermögen, so dass sie die zurückdrängende Wirkung der Retraktionsfäden auf das Zahnfleisch im Gingiva-Sulcus in besonders guter Weise erfüllen können. Die erfindungsgemäßen Retraktionsfäden verändern bei Kontakt mit Flüssigkeiten . (insbesondere Wasser) ihr Volumen und sind dadurch in der Lage, den Sulkus aufzuweiten, und ermöglichen somit eine verbesserte Genauigkeit bei der Abdrucknahme. Diese selbständige Volumenverähderung kann durch Quellen oder andere Reaktionen, wie z.B. Memoryeffekte im Material oder chemisches Schäumen, erreicht werden; insbesondere durch Quellen. Die Volumenänderung kann bis zu 20%, 30% oder sogar bis zu 50% betragen. Zudem können aus solchen Garnen gefertige Retraktionsfäden in besonders guter Weise Flüssigkeiten, wie Blut oder Speichel, aufnehmen, um einen genauen Abdruck zu ermöglichen. Ohne hierauf eingeschränkt zu sein, werden als möglicher Grund für die hohe Saugfähigkeit der durch Luftverwirbelung hergestellten Garne Kapillareffekte genannt.

Bei den zur Fertigung der Garne für den erfindungsgemäßen Retraktionsfaden einsetzbaren Luftverwirbelungsverfahren handelt es sich um dem Fachmann wohlbekannte, gängig eingesetzte Luftverwirbelungsverfahren zur Texturierung von Filamenten, welche auch unter dem Namen Luftdüsenblasverfahren bekannt sind, auf welche hier deshalb nicht näher eingegangen zu werden braucht. (Luftverwirbelungsverfahren sind z.B. in US6088892, US2003110754, US 6564438, WO0052240 und US2002073684 beschrieben). Bei diesen Verfahren werden gewöhnlich Filamente durch ein Druckmedium, wie Druckluft, welches durch eine Düse zugeführt wird, verwirbelt. Dadurch bekommen die Filamente einen textilen Charakter vermittelt. Die Luftverwirbelung kann als Kaltverfahren oder als Heißverfahren durchgeführt werden, wobei letzteres insbesondere durch hochgespannten Dampf erfolgen kann, welcher bewirkt, dass die Filamente verwirbelt und fixiert werden.

Bei einer besonders vorteilhaften Ausführungsform des erfindungsgemäßen Retraktionsfadens ist dieser auf seiner Oberfläche mit einer die Oberfläche zumindest teilweise, in vorteilhafter Weise vollständig kaschierenden, löslichen Substanz, insbesondere einer wasserlöslichen Substanz, beschichtet. Hierbei kann es sich beispielsweise um Stärke, Wachse, Gluten, Casein oder Gelatine handeln. Durch die Beschichtung des Retraktionsfadens mit einer löslichen Substanz wird bewirkt, dass der Retraktionsfaden in situ erst dann aufquellen kann, wenn die lösliche Substanz von der Oberfläche des Retraktionsfadens durch Lösen im umgebenden Fluid (etwa Speichel) von der Oberfläche des Retraktionsfadens entfernt worden ist. Alternativ dazu kann der Retraktionsfaden kurz vor der Anwendung in z.B. Alkohol zum Anlösen der Beschichtung getaucht werden um sich dann im Sulcus komplett aufzuweiten (Memoryeffekt) . Unter dieser Voraussetzung kann der Durchmesser des Retraktionsfadens stark vermindert werden, d. h. der Retraktionsfaden kann wesentlich dünner ausgeführt werden. Ein vergleichsweise dünner Retraktionsfaden kann jedoch wesentlich einfacher, genauer und insbesondere tiefer in den Sulcus eingelegt werden, um in einem stabilen Sitz für eine effektive Sulcusaufweitung platziert zu sein.

Bei einer weiteren vorteilhaften Ausführungsform des erfindungsgemäßen Retraktionsfadens umfasst dieser wenigstens einem pharmazeutischen Wirkstoff wie einen adstringierenden oder antibiotischen Wirkstoff. Beispiele der einsetzbaren Wirkstoffe sind z.B. in der EP 1 188 419 offenbart. Die eingesetzten Konzentrationen der Wirkstoffe hängen stark von der Substanz ab. Chlorhexidin kann z.B. in Lösungen zwischen 0,2 und 5 % eingesetzt werden. Bei Blutstillungsmitteln betragen die Konzentrationen beispielsweise 10 bis 30 %. Besonders vorteilhaft ist eine Ausführungsform eines Retraktionsfadens mit wenigstens einem Hohlraum zur Aufnahme wenigstens eines derartigen pharmazeutischen Wirkstoffs. Die Fasern (Garne) des Retraktionsfadens können hierbei als Hohlfasern ausgebildet sein. Die z.B in den Hohlräumen enthaltenden pharmazeutischen Wirkstoffe werden von den in situ platzierten Retraktionsfäden an das Zahnfleisch abgegeben und können dort, neben der fluidaufnehmenden Wirkung des Retaktionsfadens, etwa durch eine adstringierende Wirkung dazu beitragen, einen genauen Abdruck zu ermöglichen. Weitere Wirkungen sind Vorbeugen gegen Infektionen und Mittel zur beschleunigten Wundheilung. Die Füllung der Hohlräume mit einem pharmazeutischen Wirkstoff ist vorteilhaft in Bezug auf eine homogene Herstellung der Retraktionsfäden und verbessert auch die Lagerstabilität der pharmazeutischen Wirkstoffe, da ein Imprägnierverfahren im flüssigen Milieu wie bei den im Stand der Technik bekannten Retraktionsfäden entfällt.

Der erfindungsgemäße Retraktionsfaden kann in vorteilhafter Weise geflochten oder gestrickt (gewirkt) sein. In besonders vorteilhafter Weise zeichnen sich vor allem gestrickte Retraktionsfäden, die insbesondere aus luftverwirbelten Garnen aus gemischten Polymermaterialien gefertigt sind, durch eine hohe Elastizität aus.

Die Fäden weisen im trockenen Zustand z.B. einen Durchmesser von 0,05 - 0,5 mm, vorzugsweise von 0,1 - 0,3 mm und besonders bevorzugt von etwa 0,2 mm auf.

Die Erfindung wird nun anhand eines Ausführungsbeispiels dargestellt, wobei Bezug auf die beigefügten Figuren genommen wird. Es zeigen:
- Fig. 1: ein Ausführungsbeispiel des erfindungsgemäßen Retraktionsfadens;
- Fig. 2: eine beispielhafte Anwendung des erfindungsgemäßen Retraktionsfadens in einem Gingiva-Sulcus.

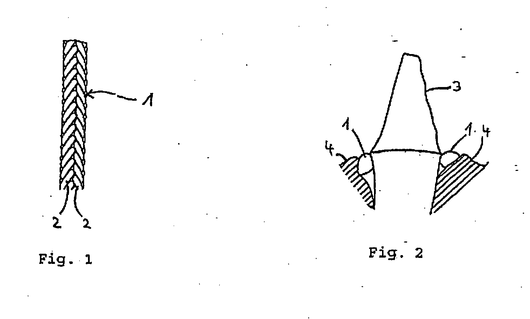

Fig. 1 zeigt ein Ausführungsbeispiel des erfindungsgemäßen Retraktionsfadens 1, bei welchem die in einem Luftverwirbelungsverfahren texturierten Garne 2 miteinander verstrickt sind. Die Garne bestehen aus einem Polymer-Mischmaterial, das aus einer Polyamid/Polyester-Mischung gewählt ist. Die Oberfläche des Retraktionsfadens ist mit wasserlöslicher Stärke (nicht gezeigt) beschichtet. Der Durchmesser des Retraktionsfadens beträgt ca. 0,2 mm. Die Garne sind als Hohlfasern,ausgebildet und enthalten einen adstringierenden Wirkstoff, und auch einen antibakteriellen Wirkstoff.

In Fig. 2 ist die Anwendung des Retraktionsfadens 1 von Fig. 1 in einem Gingiva-Sulcus gezeigt. Zur Aufweitung des Gingiva-Sulcus, d.h. der taschenförmigen Vertiefung zwischen Zahn 3 und Zahnfleisch 4, wird der Retraktionsfaden 1 in die taschenförmige Vertiefung eingelegt, zu welchem Zweck vorteilhaft ein mit einer Spitze versehenes Werkzeug eingesetzt wird. Durch den vergleichsweise kleinen Durchmesser des Retraktionsfadens 1 gelingt es dem Anwender sehr leicht, den Retraktionsfaden in eine stabile Position zur Aufweitung des Sulcus zu bringen. Bei aufgeweiteter Vertiefung zwischen Zahn und Zahnfleisch kann dann ein Abdruck von dem Zahn 1 genommen werden.

## Patentansprüche

1. Dentaler Retraktionsfaden (1),
**dadurch gekennzeichnet, dass** er mindestens ein durch ein Luftverwirbelungsverfahren gefertigtes Garn (2)' aufweist.

2. Retraktionsfaden nach Anspruch 1,
**dadurch gekennzeichnet, dass** das Garn ein oder mehrere Polymer-Materialien, insbesondere gewählt aus Polyamid und Polyester, enthält.

3. Retraktionsfaden nach Anspruch 1 oder 2,
**dadurch gekennzeichnet, dass** er auf seiner Oberfläche mit einer löslichen Substanz beschichtet ist.

4. Retraktionsfaden nach Anspruch 3,
**dadurch gekennzeichnet, dass** die lösliche Substanz Stärke ist.

5. Retraktionsfaden nach einem der vorhergehenden Ansprüche,
**dadurch gekennzeichnet, dass** er wenigstens einen Hohlraum zur Aufnahme wenigstens eines pharmazeutischen Wirkstoffs umfasst.

6. Retraktionsfaden nach Anspruch 5,
**dadurch gekennzeichnet, dass** der Hohlraum den pharmazeutischen Wirkstoff enthält, wobei der pharmazeutische Wirkstoff aus einem adstringierenden Wirkstoff und antibakteriellen Wirkstoff gewählt ist.

7. Retraktionsfaden nach einem der vorhergehenden Ansprüche,
**dadurch gekennzeichnet, dass** er gestrickt oder geflochten ist.

8. Retraktionsfaden nach einem der vorhergehenden Ansprüche,
**dadurch gekennzeichnet, dass** sein Volumen nach Einbringen in den Sulcus zunimmt.

## Claims

1. Dental retraction thread (1)
**characterised in that** it has at least one yarn (2) produced by an air vortex process.

2. Retraction thread according to claim 1,
**characterised in that** the yarn contains one or more polymer materials, selected especially from polyamide and polyester.

3. Retraction thread according to claim 1 or 2,
**characterised in that** it is coated on its surface with a soluble substance.

4. Retraction thread according to claim 3,
**characterised in that** the soluble substance is starch.

5. Retraction thread according to any one of the preceding claims,
**characterised in that** it comprises at least one cavity for accommodating at least one pharmaceutical active ingredient.

6. Retraction thread according to claim 5,
**characterised in that** the cavity contains the pharmaceutical active ingredient, wherein the pharmaceutical active ingredient is selected from an astringent active ingredient and antibacterial active ingredient.

7. Retraction thread according to any one of the preceding claims,
**characterised in that** it is knitted or braided.

8. Retraction thread according to any one of the preceding claims,
**characterised in that** its volume increases after insertion into the sulcus.

## Revendications

1. Fil dentaire rétractable (1),
**caractérisé en ce qu'**il présente au moins un fil (2) produit par un procédé d'entrelacement par air.

2. Fil rétractable selon la revendication 1,
**caractérisé en ce que** le fil contient un ou plusieurs matériaux polymères, en particulier choisis parmi le polyamide et le polyester.

3. Fil rétractable selon la revendication 1 ou 2,
**caractérisé en ce qu'**il est enduit sur sa surface d'une substance soluble.

4. Fil rétractable selon la revendication 3,
**caractérisé en ce que** la substance soluble est de l'amidon.

5. Fil rétractable selon l'une quelconque des revendications précédentes,
**caractérisé en ce qu'**il comprend au moins une cavité servant à recevoir au moins un principe actif pharmaceutique.

6. Fil rétractable selon la revendication 5,
**caractérisé en ce que** la cavité contient le principe actif pharmaceutique, sachant que le principe actif pharmaceutique est choisi parmi un principe actif présentant des propriétés astringentes et antibactériennes.

7. Fil rétractable selon l'une quelconque des revendications précédentes,
**caractérisé en ce qu'**il est tricoté ou tressé.

8. Fil rétractable selon l'une quelconque des revendications précédentes,
**caractérisé en ce que** son volume augmente après introduction dans le sulcus.
